# EUROPEAN PATENT APPLICATION

(11) **EP 4 451 175 A1**
(43) Date of publication of application: **23.10.2024**
(21) Application number: 23169221.1
(22) Date of filing: 21.04.2023
(51) Int. Cl.: G06N 3/063, G06N 3/0499, G06N 3/044

(54) **A COMPUTER-IMPLEMENTED METHOD FOR INCREASING PERFORMANCE OF AN ARTIFICIAL NEURAL NETWORK**

(71) Applicant: Siemens Aktiengesellschaft, 80333 München (DE)
(72) Inventor: Kern, Christian, 81379 München (DE); Mößbauer, Felix, 85570 Markt Schwaben (DE); Preclik, Tobias, 91085 Weisendorf (DE); Schaffner, Tobias, 82110 Germering (DE); Schüle, Tobias, 80636 München (DE)
(74) Representative: Siemens Patent Attorneys

(57) **Abstract**

A computer-implemented method and apparatus for increasing performance of an artificial neural network, ANN, having a number of network layers processed by processor cores (2) of a multi-core processor (1) comprising the steps of computing (S1) an average size of a network layer of the artificial neural network; and distributing (S2) the processing of network layers of the artificial neural network, ANN, among the processor cores (2) of the multi-core processor (1) by allocating the network layers to the processor cores (2) until the calculated average network layer size per processor core (2) is exceeded.

## Description

Independent of the grammatical term usage, individuals with male, female or other gender identities are included within the term.

The invention relates to a computer-implemented method for increasing the performance of an artificial neural network, ANN, and to a multi-core processor comprising processor cores adapted to increase the performance of an artificial neural network, ANN.

Artificial Neural Networks (ANN) are increasingly used on edge and IoT devices to process data collected from field devices such as sensors or controllers. Sample applications include monitoring of production lines, predictive maintenance of machines, and anomaly detection for power grids. In many cases, the input data consists of time series, i.e., continuous streams of values that must be processed at a certain pace. For high frequency data, an efficient execution of the artificial neural networks, ANNs, also called inference, is necessary in order to not miss any data points. Traditionally, inference is carried out for the whole artificial neural network whenever a new set of input values is available. For example, if the input data is provided at a frequency of 10kHz, a single inference must be completed within 100 microseconds. For large artificial neural networks, ANNs, this can be challenging and requires a careful optimization to optimally leverage the available hardware.

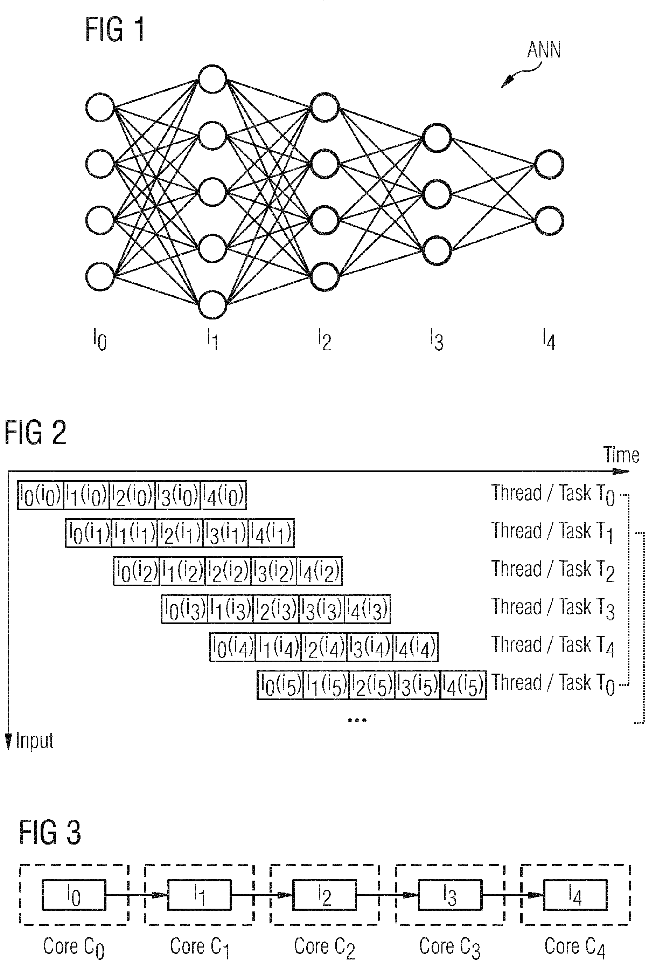

A straightforward conventional approach to increase the throughput of an artificial neural network, ANN, is to employ pipelining, a technique well-known from other application areas. An artificial neural network, ANN, comprises a number m of layers l. For example, the artificial neural network shown in Fig.1 consists of a number m=5 of layers l. Each network layer 1 has a size corresponding to the number of nodes in the respective layer l. Instead of completely executing all layers 10, ..., lm-1 before the next input data arrives, thereby potentially exploiting data parallelism, execution of the layers 1 can be distributed among multiple overlapping threads or tasks as illustrated in Fig.2 where lj(ik) denotes execution of layer lj for input data ik arriving at time k.

A thread / task Tk, which processes an input ik, may be scheduled dynamically by the operating system or a runtime library to one of the available processor cores. Alternatively, it may be statically bound to a dedicated processor core. As usual for pipelining, the latency for computing the output data remains the same, but the data throughput is increased. However, independently of whether the threads / tasks Tk are scheduled statically or dynamically, a drawback of this conventional approach is the poor cache locality for large artificial neural networks consuming dozens or even hundreds of megabytes of data. Since cache memories of processor cores are typically much smaller, they have to be reloaded several times until all layers 1 of the artificial neural network are processed, which reduces significantly the performance of the artificial neural network.

A further conventional approach is to let a processor core of a multi-core processor always execute the same layer 1 of the artificial neural network so that the layer's weights can remain in the processor core's cache memory as depicted in Fig.3. However, this conventional approach suffers from imbalances in the runtimes of the pipeline stages. In the illustrated example of Fig.3, processor core C1 forms a bottleneck since layer 11 of the exemplary artificial network of Fig.1 is the largest layer having five nodes, whereas processor core C4 idles most of the time since layer 14 of the exemplary artificial network of Fig.1 is the smallest layer with only two nodes. Additionally, there may be more layers 1 than processor cores, which requires appropriate partitioning so that all processor cores have ideally an equal amount of processing work.

Accordingly, it is an objective of the present invention to provide a method for increasing performance of an artificial neural network by maintaining a high cache locality.

This objective is achieved by a computer-implemented method for increasing performance of an artificial neural network comprising the features of claim 1.

The invention provides according to a first aspect a computer-implemented method for increasing performance of an artificial neural network, ANN, having a number of network layers processed by the processor cores of a multi-core processor comprising the steps of:
computing an average size of the network layers of the artificial neural network; and
distributing the processing of network layers of the artificial neural network, ANN, among the processor cores of the multi-core processor by allocating the network layers to the processor cores until the calculated average network layer size per processor core is exceeded.

The average size of the network layers is computed depending on the number of processor cores.

In a possible embodiment of the computer-implemented method for increasing performance of an artificial neural network, the performance corresponds to the inference data throughput of the artificial neural network, ANN.

In a possible embodiment of the computer-implemented method for increasing performance of an artificial neural network, the network layer size of a network layer corresponds to the number of network nodes within the respective network layer.

In a possible embodiment of the computer-implemented method for increasing performance of an artificial neural network, the artificial neural network, ANN, comprises a feed forward neural network with a predefined number of network layers.

In a possible embodiment of the computer-implemented method for increasing performance of an artificial neural network, the artificial neural network, ANN, comprises a recurrent neural network, RNN, having feedback loops.

In a possible embodiment of the computer-implemented method for increasing performance of an artificial neural network, adjacent network layers of the recurrent neural network, RNN, having feedback loops are collapsed in a pre-processing step into a single virtual network layer.

In a possible embodiment of the computer-implemented method for increasing performance of an artificial neural network, network layers allocated to a processor core of the multi-core processor are processed by a neural network inference engine running on the processor core to calculate inference data for the network layers allocated to the respective processor core.

In a possible embodiment of the computer-implemented method for increasing performance of an artificial neural network, inference data is transferred between processor cores of the multi-core processor via a data memory.

In a possible embodiment of the computer-implemented method for increasing performance of an artificial neural network, each processor core of the multi-core processor comprises at least one associated cache memory used to store inference data calculated by the neural network inference engine running on the respective processor core for the network layers allocated to the respective processor core.

In a possible embodiment of the computer-implemented method for increasing performance of an artificial neural network, weight coefficients of network layers allocated to a processor core of the multi-core processor are stored in the at least one cache memory of the respective processor core.

In a possible embodiment of the computer-implemented method for increasing performance of an artificial neural network, the artificial neural network, ANN, comprises an input network layer, a predefined number of hidden network layers and an output network layer.

In a possible embodiment of the computer-implemented method for increasing performance of an artificial neural network, input data applied to the input network layer of the artificial neural network, ANN, is generated by field devices comprising sensors and/or controllers.

In a possible embodiment of the computer-implemented method for increasing performance of an artificial neural network, the input data applied to the input network layer of the artificial neural network, ANN, is provided by a data source at a high frequency.

The invention further provides a multi-core processor comprising processor cores adapted to increase performance of an artificial neural network, ANN, having a number of network layers processed by processor cores of a multi-core processor, wherein processing of network layers of the artificial neural network, ANN, is distributed among the processor cores of the multi-core processor by allocating the network layers to the processor cores until a computed average network layer size of the respective artificial neural network, ANN, per processor core of said multi-core processor is exceeded.

In a preferred embodiment, the multi-core processor comprises a predefined number of processor cores each running a neural network engine and having at least one cache memory.

The invention further provides an edge device including a multi-core processor comprising processor cores adapted to increase performance of an artificial neural network, ANN, having a number of network layers processed by processor cores of the multi-core processor, wherein processing of network layers of the artificial neural network, ANN, is distributed among the processor cores of the multi-core processor by allocating the network layers of the artificial neural network, ANN, to the processor cores until a computed average network layer size of the respective artificial neural network, ANN, per processor core of said multi-core processor is exceeded.

The invention further provides an automation system comprising an edge device including a multi-core processor comprising processor cores adapted to increase performance of an artificial neural network, ANN, having a number of network layers processed by processor cores of the multi-core processor, wherein processing of network layers of the artificial neural network, ANN, is distributed among the processor cores of the multi-core processor by allocating the network layers of the artificial neural network, ANN, to the processor cores until a computed average network layer size of the respective artificial neural network, ANN, per processor core of said multi-core processor is exceeded.

In the following, different aspects of the present invention are described in more detail with reference to the enclosed figures.
Fig.1 shows schematically an exemplary artificial neural network;
Fig.2 shows a schematic timing diagram of a conventional approach for illustrating a problem underlying the present invention;
Fig.3 shows a schematic block diagram of a further conventional approach for illustrating a problem underlying the present invention;
Fig.4 shows a block diagram for illustrating the operation of a computer-implemented method for increasing performance of an artificial neural network according to the present invention;
Fig.5 shows a flow chart for illustrating a possible exemplary embodiment of a computer-implemented method for increasing performance of an artificial neural network according to the present invention.

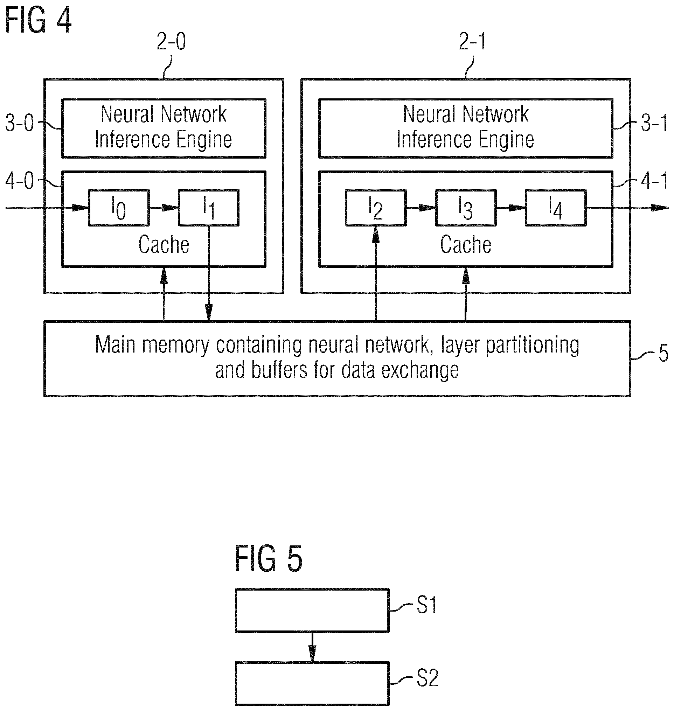

The invention provides according to a first aspect a computer-implemented method for increasing performance of an artificial neural network, ANN, such as the exemplary artificial neural network ANN illustrated in Fig.1 having a number m of network layers 1 processed by processor cores of a multi-core processor 1 as shown in Fig.4. The multi-core processor 1 can comprise a number N of processor cores 2-i. In the example shown in Fig. 4, the multi-core processor 1 comprises N=2 processor cores 2-0, 2-1. The multi-core processor 1 comprises two or more processor cores 2-i adapted to increase performance of an artificial neural network, ANN, such as shown in Fig.1 having a number m of network layers 1 processed by the processor cores 2 of the multi-core processor 1. The multi-core processor 1 is a microprocessor on a single integrated circuit with two or more separate processing units, called processor cores, each of which reads and executes program instructions.

Processing of the network layers 1 of the artificial neural network, ANN, is distributed among the different processor cores 2 of the multi-core processor 1 by allocating the network layers 1 to the processor cores 2 until a computed average network layer size of the respective artificial neural network, ANN, per processor core 2 of said multi-core processor 1 is exceeded. The layers 1 of the artificial neural network ANN are partitioned to reduce an imbalance while maintaining sufficiently large cache locality.
In a possible embodiment, the following heuristic is used to compute such a partition, where m is the number of network layers 1 of the artificial neural network ANN:

```
partition, layers = [], {}
 avg = sum({size(li) | i in range(0, m)}) / processor_cores
 for i in range(0, m):
  layers.add(li)
  if sum({size(l) | 1 in layers}) >= avg:
    partition.append(layers)
    layers = {}
    return partition
```

The algorithm adds layers 1 to a processor core 2-i until the intended average size per processor core 2-i is exceeded. Given for example two processor cores 2-0, 2-1 as illustrated in Fig.4, the algorithm computes the following partition for the exemplary artificial neural network ANN of Fig.1:
[{10, 11}, {12, 13, 14}].

Accordingly, the first two network layers 10, 11 of the exemplary artificial neural network ANN of Fig.1 are allocated to the first processor core 2-0 and the third to fifth network layers 12, 13, 14 of the exemplary artificial neural network ANN of Fig.1 are allocated to the second processor core 2-1.

This information can be used to distribute the layers 1 among the different processor cores 2 of a multi-core processor 1 as shown in Fig.4. As depicted in Fig.5, the neural network inference engine 3-i, which runs on each processor core 2-i, executes those layers 1 allocated to the corresponding processor core 2-i. Inference data to be transferred between adjacent processor cores 2 is exchanged in a preferred embodiment via a main memory 5, otherwise it remains in the processor core's local cache memory 4-i.

The computer-implemented method for increasing performance of an artificial neural network ANN works well for artificial neural networks without feedback loops. In case of recurrent neural networks RNN, which maintain a state, the network layers 1 that are part of a feedback loop must be executed on the same processor core. For that purpose, the computer-implemented method for increasing performance can in a possible embodiment be extended with a preprocessing step that collapses feedback loops within the artificial neural network into a single virtual layer. For example, in case that the exemplary artificial neural network ANN of Fig.1 has a feedback loop from network layer 14 to network layer 13, an intermediate network with four layers 10, 11, 12, 13-4 is automatically created in the preprocessing step which is used to compute an appropriate partition.

A main difference between the method according to the present invention and the conventional approaches is that artificial neural networks ANN are executed in a pipelined fashion with static (fixed) allocation of layers to processor cores. This way, data locality is improved, which results in better cache utilization and higher performance.

Fig.5 illustrates a schematic flow chart of a possible embodiment of a computer-implemented method according to the present invention for increasing performance of an artificial neural network ANN.

In the illustrated exemplary embodiment of Fig. 5, the computer-implemented method for increasing performance of an artificial neural network comprises two main steps.

In a first step S1, an average size of the network layers 1 of the artificial neural network ANN is computed.

In a second step S2, processing of the network layers 1 of the artificial neural network, ANN, is distributed among the processor cores 2 of the multi-core processor 1 by allocating the network layers 1 to the processor cores 2 until the calculated average network layer size per processor core 2 of the multi-core processor 1 is exceeded.

The applied performance metric can comprise an inference data throughput of the artificial neural network, ANN.

The network layer size of a network layer 1 corresponds in a preferred embodiment to the number of network nodes within the respective network layer l.

The artificial neural network, ANN, can comprise a feed forward neural network with a predefined number m of network layers 1 as shown in Fig.1

The artificial neural network, ANN, may also comprise a recurrent neural network, RNN, having feedback loops. In this case, adjacent network layers of the recurrent neural network, RNN, having feedback loops are collapsed in a pre-processing step into a single virtual network layer.

Network layers 1 allocated to a processor core 2 of the multi-core processor 1 are processed by a neural network inference engine 3 of the processor core 2 to calculate inference data for the network layers 1 allocated to the respective processor core 2. The inference data is transferred between processor cores 2 of the multi-core processor 1 via a data memory. Each processor core 2 of the multi-core processor 1 comprises at least one associated cache memory 4 used to store inference data calculated by the neural network inference engine 3 of the respective processor core 2 for the network layers 1 allocated to the respective processor core 2. Weight coefficients of network layers 1 allocated to a processor core 2 of the multi-core processor 1 are stored in the at least one cache memory 4 of the respective processor core 2.

The processor core 2 can comprise in a possible implementation more than one cache memory 4, i.e., it may comprise a multi-level cache memory. A cache hierarchy, or multi-level caches, is a memory architecture that uses a hierarchy of data memories based on varying access speeds to cache data. Highly requested data can be cached in high-speed access memories, allowing swifter access by processor cores.

The artificial neural network, ANN, comprises an input network layer, a predefined number of hidden network layers and an output network layer. In the example shown in Fig.1, the artificial neural network, ANN, is a feed forward network comprising an input network layer 10, three hidden network layers 11, 12, 13 and an output network layer 14.

Input data applied to the input network layer 10 of the artificial neural network, ANN, can be generated by field devices comprising sensors and/or controllers. The input data applied to the input network layer 10 of the artificial neural network, ANN, can comprise high frequency data provided by a data source. The high frequency data can, for instance, be applied with a frequency of at least 10 kHz. The sensors and controllers can form part of an automation system supplying high frequency data to a multi-core processor 1 adapted to perform the method according to the present invention in real time. The multi-core processor 1 comprises a predefined number of processor cores 2 each having a neural network engine 3 and at least one cache memory 4. The multi-core processor 1 can be integrated in an edge device of the automation system. Data sample applications executed on the multi-core processor 1 can, for instance, be used to monitor production lines, to perform predictive maintenance of machines of the automation system or can, for instance, be used for anomaly or failure detection for power grids. The high frequency input data applied to the input layer 10 of the artificial neural network ANN consists of time series data, i.e., a continuous stream of data values that is processed by the multi-core processor 1 in real time at a certain pace.

An edge device within an edge-based computing system of an industrial facility can comprise in a possible embodiment a multi-core processor 1, a data memory, a memory for storing edge applications locally, and interfaces, in particular USB interfaces, Ethernet interfaces or display ports. The edge device comprises in a possible embodiment a local controller having at least one multi-core processor 1 adapted to execute program code of an edge application implemented by an artificial neural network ANN loaded from a local program memory of the edge device.

The program code of the edge application can be deployed in the local memory of the edge device during a setup of the edge-based computing system or distributed via a system bus of the edge-based computing system.

Independent of the grammatical term usage, individuals with male, female or other gender identifiers are included within the term.

## Claims

1. A computer-implemented method for increasing performance of an artificial neural network, ANN, having a number of network layers processed by processor cores (2) of a multi-core processor (1) comprising the steps of:
computing (S1) an average size of a network layer of the artificial neural network; and
distributing (S2) the processing of network layers of the artificial neural network, ANN, among the processor cores (2) of the multi-core processor (1) by allocating the network layers to the processor cores (2) until the calculated average network layer size per processor core (2) is exceeded.

2. The computer-implemented method for increasing performance of an artificial neural network, ANN, according to claim 1 wherein the performance corresponds to the inference data throughput of the artificial neural network, ANN.

3. The computer-implemented method for increasing performance of an artificial neural network, ANN, according to claim 1 or 2 wherein the network layer size of a network layer corresponds to the number of network nodes within the respective network layer.

4. The computer-implemented method for increasing performance of an artificial neural network, ANN, according to any of the preceding claims 1 to 3 wherein the artificial neural network, ANN, comprises a feed forward neural network with a predefined number of network layers.

5. The computer-implemented method for increasing performance of an artificial neural network, ANN, according to any of the preceding claims 1 to 3 wherein the artificial neural network, ANN, comprises a recurrent neural network, RNN, having feedback loops.

6. The computer-implemented method for increasing performance of an artificial neural network, ANN, according to claim 5 wherein adjacent network layers of the recurrent neural network, RNN, having feedback loops are collapsed in a pre-processing step into a single virtual network layer.

7. The computer-implemented method for increasing performance of an artificial neural network, ANN, according to any of the preceding claims 1 to 6 wherein network layers allocated to a processor core (2) of the multi-core processor (1) are processed by a neural network inference engine (3) of the processor core (2) to calculate inference data for the network layers allocated to the respective processor core (2).

8. The computer-implemented method for increasing performance of an artificial neural network, ANN, according to claim 7 wherein inference data is transferred between processor cores (2) of the multi-core processor (1) via a data memory.

9. The computer-implemented method for increasing performance of an artificial neural network, ANN, according to any of the preceding claims 1 to 8 wherein each processor core (2) of the multi-core processor (1) comprises at least one associated cache memory (4) used to store inference data calculated by the neural network inference engine (3) of the respective processor core (2) for the network layers allocated to the respective processor core (2).

10. The computer-implemented method for increasing performance of an artificial neural network, ANN, according to claim 9 wherein weight coefficients of network layers allocated to a processor core (2) of the multi-core processor (1) are stored in the at least one cache memory (4) of the respective processor core (2).

11. The computer-implemented method for increasing performance of an artificial neural network, ANN, according to any of the preceding claims 1 to 10 wherein the artificial neural network, ANN comprises an input network layer, a predefined number of hidden network layers and an output network layer.

12. The computer-implemented method for increasing performance of an artificial neural network, ANN, according to claim 11 wherein input data applied to the input network layer of the artificial neural network, ANN, is generated by field devices comprising sensors and/or controllers.

13. The computer-implemented method for increasing performance of an artificial neural network, ANN, according to claim 12 wherein the input data applied to the input network layer of the artificial neural network, ANN, comprises data provided by a data source with a high frequency.

14. A multi-core processor (1) comprising processor cores (2) adapted to perform the method according to any of the preceding claims 1 to 13.

15. The multi-core processor according to claim 14 comprising a predefined number of processor cores (2) each having a neural network engine (3) and at least one cache memory (4).

16. An edge device comprising a multi-core processor (1) according to claim 14 or 15.

17. An automation system comprising an edge device according to claim 16.
